(19) Europäisches Patentamt
European Patent Office
Office européen des brevets

(11) Publication number: 0 287 202 A1

(12) **EUROPEAN PATENT APPLICATION**

(21) Application number: 88301523.2

(51) Int. Cl.4: G02B 7/04

(22) Date of filing: 23.02.88

(30) Priority: 04.04.87 GB 8708109
14.01.88 GB 8800770

(43) Date of publication of application:
19.10.88 Bulletin 88/42

(84) Designated Contracting States:
AT BE CH DE ES FR GR IT LI LU NL SE

(71) Applicant: GEC-Marconi Limited
The Grove Warren Lane
Stanmore Middlesex HA7 4LY(GB)

(72) Inventor: Blackburn, William James
159 Marine Parade Leigh on-Sea
Southend Essex SS9 2RB(US)

(74) Representative: Maury, Richard Philip
The General Electric Company p.l.c. Central
Patent Department (Chelmsford Office)
Marconi Research Centre West Hanningfield,
Great Baddow
Chelmsford Essex CM2 8HN(GB)

(54) **Apparatus for adjusting the position of an element.**

(57) A facility is provided to adjust a member (3), such as a telescope lens, between two nominal positions and to provide fine adjustment of each position. The fine adjustment is provided by two members (12) which slide or otherwise move and which define one half of a detent mechanism. The other co-operating part (5,18) of the detent mechanism is carried on a shaft (4) connected to the member (3) whose position is to be adjusted and which can be pushed (by lever 7) so as to co-operate with one or the other of the first mentioned detent parts (12).

10d
1
3
3
2
20
19
18
4
7
6
8
10a
12
12
17
5
17
14
15
10c
10
11
14
10b
11
10c
9
16
16

EP 0 287 202 A1

# Apparatus for adjusting the position of an element

This invention relates to apparatus for adjusting the position of an element. The invention arose in consideration of problems in moving an optical element within a telescope between two nominal positions required to give two respective magnifications; and to allow for fine adjustment at each of these positions to bring the telescope into correct focus. The invention is not however limited in its application to telescopes and could be used in any other environment where analogous adjustments are required.

The invention provides an apparatus for adjusting the position of an element between two relatively widely spaced nominal positions and for providing fine adjustment of these positions comprising: two first members each having an elongate first detent feature; a further member fixed relative to the element to be adjusted and having a further detent feature arranged so as to engage optionally with one or the other of the first detent features thereby holding the element optionally at one or the other of the two nominal positions; and fine adjustment means for moving each of the first members so as to select the portion of the first detent feature which co-operates with the further detent feature, the direction of the said movement and the arrangement of the first detent feature being such that this movement effects the said fine adjustment.

It will be appreciated that by employing the invention it is possible to set the fine adjustment independently at each of the two nominal positions.

The fine adjustment means is preferably arranged to slide each of the first members. However the sliding action is not essential and it would be possible in alternative arrangements for the first detent members to be rotated. One possibility would for example be for them to take the form of rotatable discs formed with spiral grooves constituting the first detent features. A further possibility would be for them to take the form of rotating cylinders formed with helical grooves as the first detent features. Where a sliding action is employed it is preferred to use a rack and pinion arrangement to perform the sliding movement in response for example to rotation of a knob.

Movement of the element between the two nominal positions can be performed simply by pushing or pulling it but it is preferred to provide some mechanism for assisting in this action. In one arrangement it is convenient to provide a lever for this purpose.

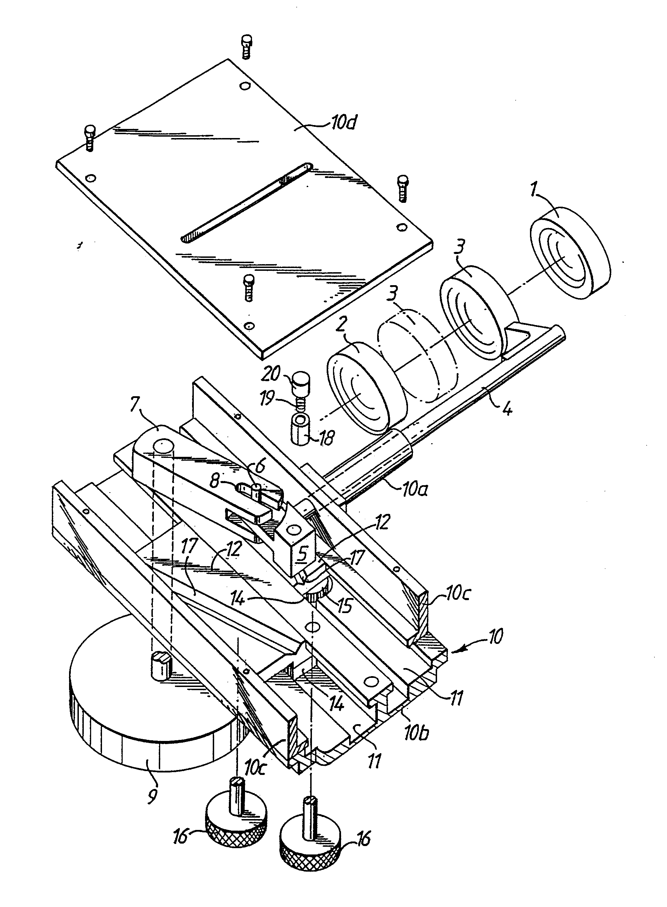

One way in which the invention may be performed will now be described by way of example with reference to the accompanying drawing which is a perspective view of an adjustment mechanism constructed in accordance with the invention designed for use as part of a telescope, certain optical parts of which are shown schematically.

Referring to the drawing, the telescope comprises an objective lens 1, an eye piece 2 and an optical element 3 which is to be adjusted between two nominal positions in order to provide two respective magnification factors. At each of the two nominal positions fine adjustment is required in order to obtain correct focus.

The optical element 3 is connected to a shaft 4 which slides in a tube 10a forming part of a casing 10 to be described later. The end of the shaft 4 remote from the optical element 3 carries a block 5 in a bore of which is set a pin 6. A lever 7 pivotted on a shaft 7a has a bifurcated end which receives the block 5. Each bifurcation has a slot 8 in which the pin 6 is retained. The lever 7 can be rotated by manual manipulation of a handle 9 to move the element 3 between its two nominal positions.

The housing 10 is defined by a base plate 10b, side walls 10c and a retaining plate 10d. These define two channels 11 receiving respective slides 12. Each slide is attached to a toothed rack 14 which co-operates with a pinion 15 driven by manual manipulation of a knob 16 to move the slide longitudinally.

Each slide has a first detent feature in the form of a V-shaped slot 17 the longitudinal axis of which extends at an acute angle to the direction of sliding movement and at an acute angle to the direction of movement of the shaft 4. Each slot or groove 17 is capable of cooperating with a further detent feature in the form of a plug 18. A part-cylindrical shaped under-surface (not shown) of the plug is urged by a spring 19 into the groove, the spring being pressed down by a cap 20 which bears against the cover plate 10d of the housing 10.

In operation adjustment of the optical element 3 between the two nominal positions is effected by rotating the handle 9 thus forcing the shaped end of the plug 18 out of the groove in which it is located. The shaped end of the plug then rides over the slides 12 and the contiguous upper surface of the plate 10b until it engages the other groove. When it does so the spring action tends to rotate the plug so that the axis of its cylindrical-shaped under-surface is aligned with the groove.

Fine adjustment is effected by rotating the appropriate knob 16 which moves the slide 12 along the appropriate channel. The effect of this is to change the portion of the appropriate groove into which the plug 18 fits, different portions being spaced at different positions relative to the direction of the axis of the shaft 4 so as to effect the required fine adjustment. In effect, the grooves 17 are cam surfaces for the plug 18 which is a cam follower, although of course the fine adjustment, by moving the groove, may be effected for future operation even if the cam follower is not in engagement. It is notable that the two facilities for adjusting the focus can be set independently and that movement between the two nominal positions does not interfere with the setting.

## Claims

1. Apparatus for adjusting the position of an element (3) between two relatively widely spaced nominal positions and for providing fine adjustment of these positions, characterised by: first members (12) each having an elongate first detent feature (17); a further member (5) fixed relative to the element (3) to be adjusted and having a further detent feature (18) arranged so as to engage optionally with one or the other of the first detent features (17) thereby holding the element (3) optionally at one or the other of the two nominal positions; and fine adjustment means (15,16) for moving each of the first members (12) so as to select the portion of the first detent feature (17) which co-operates with the further detent feature (18), the direction of the said movement and the arrangement of the first detent feature (17) being such that this movement effects the said fine adjustment.

2. Apparatus according to claim 1 in which each first detent feature (17) extends in a direction which is not parallel to its direction of elongation.

3. Apparatus according to claim 1 or 2 in which the fine adjustment means (15,16) is arranged to slide each of the first members (12).

4. Apparatus according to claim 1 or 2 in which the fine adjustment means (15,16) is arranged to rotate each of the first members (12).

5. Apparatus according to claim 3 in which the fine adjustment means (15,16) includes rack and pinion arrangements for sliding the first members (12).

6. Apparatus according to any preceding claim including a lever (7) connected to the said element (3) and effective to move it between the two nominal positions.

7. An optical instrument comprising an optical element (3) and means for adjusting it constructed in accordance with any preceding claim.

8. Apparatus for adjusting the position of an element (3) substantially as described with reference to the accompanying drawings and substantially as illustrated therein.

9. A telescope employing apparatus according to claim 8.

10d
1
3
3
2
20
19
4
7
18
6
8
10a
12
5
17
17
12
14
15
10c
10
11
14
10b
11
10c
9
16
16

European Patent Office

# EUROPEAN SEARCH REPORT

Application Number

EP 88 30 1523

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | US-A-4 351 587 (K. MATSUO) * column 2, lines 30-44, claims 1,2 * --- | 1 | G 02 B 7/04 |
| A | US-A-4 548 481 (K. YAMADA) * abstract; column 6, line 57 - column 7, line 19; figures 10-12 * --- | 1 | |
| A | US-A-4 273 423 (K. UESUGI) * abstract; figure 1; column 3, lines 12-38; claims 1,2 * ----- | 1 | |
| | | | **TECHNICAL FIELDS SEARCHED (Int. Cl.4)** |
| | | | G 02 B 7/00<br>G 02 B 15/00<br>G 02 B 21/00<br>G 02 B 23/00 |

The present search report has been drawn up for all claims

| Place of search | Date of completion of the search | Examiner |
|---|---|---|
| BERLIN | 14-06-1988 | HYLLA W.A. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document